# FASCICULE DE BREVET EUROPEEN

(11) **EP 0 710 200 B1**
(45) Date de publication et mention de la délivrance du brevet: **09.04.1997**
(21) Numéro de dépôt: 94923741.6
(22) Date de dépôt: 27.07.1994
(51) Int. Cl.: B61K 1/00, B61B 1/02

(54) **VEHICULES ET INSTALLATION POUR LE TRANSBORDEMENT EN MARCHE DE PERSONNES OU DE MARCHANDISES**
FAHRZEUGE UND VORRICHTUNG ZUM ÜBERWECHSELN VON PERSONEN UND GÜTERN WÄHREND DER FAHRT
VEHICLES AND ARRANGEMENT FOR TRANSFERRING PASSENGERS OR GOODS BETWEEN MOVING VEHICLES

(30) Priorité: 27.07.1993 FR 9309512
(43) Date de publication de la demande: 08.05.1996
(73) Titulaire: Mujal Ferrer, Jorge, 08950 Esplugues de Llobregat, Barcelona (ES)
(72) Inventeur: Mujal Ferrer, Jorge, 08950 Esplugues de Llobregat, Barcelona (ES)
(74) Mandataire: Manresa Val, Manuel
(86) Numéro de dépôt international: FR9400938
(87) Numéro de publication internationale: WO9503968

(56) Documents cités:
- FR-A- 1 500 098
- FR-A- 2 663 599
- US-A- 3 823 671
- US-A- 3 958 512

## Description

L'invention est relative à des véhicules circulant sur des voies constituées par un ou deux rails du genre comportant :
a) une première voie continue, longue distance, reliant deux gares principales extrèmes, sur laquelle circule, sans le moindre arrêt, un premier véhicule;
b) au moins une deuxième voie, courte distance, sur laquelle circule un deuxième véhicule apte à permettre le transbordement en marche, d'un véhicule à l'autre, de personnes ou de marchandises, ledit deuxième véhicule retournant ensuite à une gare secondaire pour y effectuer une opération de chargement et/ou de déchargement.

Des véhicules et des installations du type en question sont décrits essentiellement dans les brevets suivants :
- FR-A-2663599 qui décrit un système comportant un circuit principal sur lequel circule un vaisseau et des circuits secondaires sur lesquels circulent des navettes destinées à la desserte entre le vaisseau et les gares. Le transfert entre le vaisseau et les navettes s'effectue sur deux voies paralléles,toutes proches, à la même vitesse.

La solution en question qui consiste à effectuer le transbordement sur deux voies paralléles présente les inconvénients suivants :
- difficulté technique de réaliser des voies parfaitement paralléles et coplanaires sur des distances nécessaires au transbordement et coût très élevé d'une telle installation d'une part à cause de la technicité nécessaire (infrastructure lourde) et d'autre part du fait du doublement de la voie sur une longueur non négligeable;
- nécessité d'un déflecteur éliminant les turbulances entre les deux véhicule lors du transbordement (technicité et coût élevé);
- difficulté technique de réaliser des moyens aptes à permettre l'accouplement temporaire latéral et le transbordement latéral et coût très élevé de tels équipements.
- US-A-3823671, US-A-3958512 et FR-A-1500098 qui décrivent des systèmes similaires à transbordement latéral sur deux voies paralléles.

L'invention vise donc à réaliser des véhicules et une installation qui suppriment les inconvénients sus-mentionnés. Elle voit son application privilégiée dans les trains à grande vitesse qui doivent être rentables pour développer leur implantation sur de grandes distances.
Pour obtenir cette rentabilité, deux objectifs doivent être atteints, la rapidité et le nombre de passagers optimisé (le maximun pour un nombre de wagons bien déterminé).
La rapidité impose en plus des conditions particulières aux installations (voies) pour que le nombre d'arrêts soir le plus réduit possible.
Le nombre maximun de passagers peut être atteint sur la base des principes suivants : économie de temps, bon service, économie de coût, commodité, sécurité et simple accès.
Malheureusement, deux de ces principes semblent être antagonistes, l'économie de temps et le simple accès, avec la possibilité de descendre et de monter toutes les fois que l'on désire le long du parcours à des distances inférieures à 50 kilomètres et dans des villes de moins de 25 000 habitants.
Le principe d'économie de temps impose la réduction maximale du nombre d'arrêts (limitation aux grandes villes et aux seuls habitants de ces dernières). En plus, le rapprochement de la ligne à grande vitesse de ces villes comporte des coûts économiques importants (expropriations onéreuses...).
L'invention permet de combiner ces deux principes d'économie de temps, par la réduction des arrêts, et le simple accès à partir d'un grand nombre de gares de transbordement. Elle permet aussi des économies importantes car il n'est plus nécessaire de rapprocher les lignes grande vitesse des grandes villes, avec en plus la possibilité d'avoir un parcours quasi-rectiligne et en conséquence d'optimiser le temps de parcours. La ligne à grande vitesse pourra par l'application de ce système être également écologique car il ne sera plus nécessaire de traverser des zones protégées.

L'invention concerne à cet effet un ensemble véhicules- installation qui se caractérise en ce que les voies à longue et à courte distances comportent un tronçon commun que les deux véhicules empruntent temporairement pour y effectuer l'opération de transbordement et en ce que lesdits deux véhicules comportent, pour permettre ladite opération lorsqu'ils circulent à la même vitesse sur ledit tronçon commun, des moyens aptes à permettre ledit transbordement en tête ou en queue desdits deux véhicules, des moyens aptes à permettre l'accouplement temporaire en tête ou en queue desdits deux véhicules et des moyens aptes à permettre l'échange d'informations entre lesdits deux véhicules de manière à synchroniser leurs vitesses respectives pendant la phase de transbordement, à contrôler le début et la fin du transbordement et à générer tous les signaux de sécurité nécessaires à la protection des personnes et des marchandises.

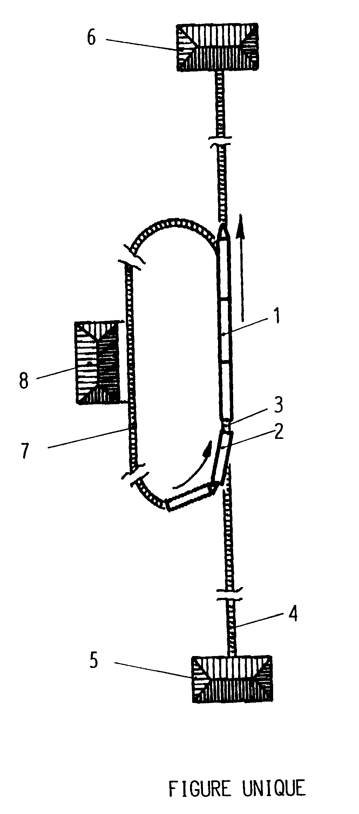

Les caractéristiques et les avantages de l'invention vont apparaître plus clairement à la lecture de la description détaillée qui suit d'un mode de réalisation préféré de l'invention donné à titre d'exemple non limitatif et représenté au dessin annexé (figure unique).

L'ensemble véhicules-installation représenté est du type comportant :
- une première voie continue (4), longue distance, reliant deux gares principales extrèmes (5) et (6), sur laquelle circule, sans le moindre arrêt, un premier véhicule (1);
- au moins une deuxième voie (7), courte distance, sur laquelle circule un deuxième véhicule (2) apte à permettre le transbordement en marche, d'un véhicule à l'autre, de personnes ou de marchandises, ledit deuxième véhicule retournant ensuite à une gare secondaire (8) pour y effectuer une opération de chargement et/ou de déchargement.
Les voies (4) et (7) comportent un tronçon commun (3) que les deux véhicules (1) et (2) empruntent temporairement pour y effectuer l'opération de transbordement.
Les deux véhicules (1) et (2) comportent, pour permettre ladite opération lorsqu'ils circulent à la même vitesse sur ledit tronçon commun, des moyens aptes à permettre ledit transbordement, en tête ou en queue, desdits deux véhicules, des moyens aptes à permettre l'accouplement temporaire, en tête ou en queue, de ces derniers et des moyens aptes à permettre l'échange d'informations entre ces deux derniers de manière à synchroniser leurs vitesses respectives pendant la phase de transbordement, à contrôler le début et la fin de ce dernier et à générer tous les signaux de sécurité nécessaires à la protection des personnes et des marchandises.
Les moyens aptes à permettre le transbordement d'un véhicule à l'autre comportent des dispositifs mécaniques indifféremment des types :
- plate-forme escamotable apte à établir un passage entre les deux véhicules : ladite plate-forme pouvant être repliable ou pivotante ou réalisée en plusieurs éléments coulissants et associée à des détecteurs de positionnement validant, pour des raisons de commodité, les commandes assurant la mise en oeuvre de la plate-forme;
- tunnel repliable apte à établir un passage entre les deux véhicules pendant la phase de transbordement : les détecteurs de positionnement et de validation pouvant être du même type que ceux sus-mentionnés;
- container apte à être transféré d'un véhicule à l'autre pendant ladite phase par exemple au moyen de rails escamotables ou de bras pivotants;
- ouvertures pourvues de portes escamotables.
Les moyens aptes à permettre l'accouplement des deux véhicules entre eux comportent des dispositifs des types mâchoires électromécaniques ou électromagnétiques.
Les moyens aptes à permettre l'échange d'informations entre les deux véhicules comportent des dispositifs (circuits) électriques et électroniques.
Le tronçon commun (3) possède une longueur fonction du temps maximun nécessaire au transbordement et à la vitesse commune aux deux véhicules pendant la phase de transbordement.
Le tronçon commun (3) peut appartenir à la voie longue distance (4). Dans ce cas la voie courte distance (7) est raccordée à la voie longue distance (4) au moyen d'aiguillages situés à chaque extrémité dudit tronçon.
Le véhicule circulant sur la voie principale réduit, pendant la phase de transbordement, sa vitesse pour la synchroniser sur celle du véhicule circulant sur la voie secondaire.

## Revendications

1. Méthode de transbordement d'un train à un autre faisant appel à des véhicules circulant sur des voies constituées par un ou deux rails du genre comportant:
a. concernant les voies:
- une première voie continue (4), longue distance, reliant deux gares principales extrêmes (5) et (6), sur laquelle circule, sans le moindre arrêt, un premier véhicule (1);
- au moins une deuxième voie (7), courte distance, sur laquelle circule un deuxième véhicule (2) apte à permettre le transbordement en marche, d'un véhicule à l'autre, de personnes ou de marchandises, ledit deuxième véhicule retournant ensuite à une gare secondaire (8) pour y effectuer une opération de chargement et/ou de déchargement;
b. concernant les véhicules, des moyens aptes à permettre ledit transbordement, l'accouplement temporaire desdits deux véhicules et l'échange d'informations entre ces derniers de manière à synchroniser leurs vitesses respectives pendant la phase de transbordement, de contrôler le début et la fin du transbordement et de générer tous les signaux nécessaires à la protection des personnes et des marchandises;
**caractérisée** en ce que les véhicules (1) et (2) empruntent temporairement, l'un derrière l'autre, un tronçon commun (3) des voies (4) et (7), jusqu'à s'accoupler tête contre queue, et en ce que le transfert des personnes ou des marchandises d'un train à l'autre a lieu par les extrémités contiguës des deux trains pendant leur accouplement.

2. Installation de transbordemement d'un train à un autre, pour la mise en oeuvre de la méthode selon la revendication 1, caractérisée en ce que:
- les voies (4) et (7) comportent un tronçon commun (3) que les véhicules (1) et (2) empruntent temporairement, l'un derrière l'autre, pour effectuer l'opération de transbordement;
- les moyens aptes à permettre ledit transbordement comportent des dispositifs, placés en tête ou en queue desdits véhicules, aptes à effectuer le transfert de personnes ou de marchandises dans le sens de la marche;
- les moyens aptes à permettre l'accouplement desdits deux véhicules comportent des dispositifs, placés en tête ou en queue desdits véhicules, aptes à assurer le maintien de ces derniers, l'un derrière l'autre, sur le tronçon commun (3), pendant l'opération de transbordement.

3. Installation, selon la revendication 2, caractérisée en ce que le tronçon commun (3) possède une longueur fonction du temps maximum nécessaire au transbordement et à la vitesse commune aux deux véhicules pendant la phase de transbordement.

4. Installation, selon la revendication 2, caractérisée en ce que le tronçon commun (3) appartient à la voie longue distance (4) et en ce que la voie courte distance (7) est raccordée à ladite voie longue distance au moyen d'aiguillages situés à chaque extrémité dudit tronçon.

## Claims

1. Transfer system from one train to another using vehicles circulating on tracks constituted by one or two rails of the type comprising:
a) Concerning the rails:
- one continuous long-distance rail (4) that joins together two main and extreme stations (5) and (6) upon which rail a first vehicle (1) circulates without a single stop (1);
- at least one second short distance rail (7), upon which a second vehicle (2) circulates so as to allow transferring persons or merchandise from one vehicle to another while in motion, the mentioned second vehicle then returning onto a secondary station (8) where it carries out a loading and/or unloading operation.
b) concerning the vehicles, adequate means allowing the mentioned transfer, the temporal coupling of the two referred vehicles and interchanging of information between them, in such a manner that synchronization of both respective speeds takes place during the transfer phase, as well as a control of the beginning and finalizing of the transfer and generation of all the necessary signals for protection of both persons and merchandise;
**characterized** by the fact that vehicles (1) and (2) temporarily use one behind the other a common track (3) of rails (4) and (7) until a coupling of the head vehicle with the tail vehicle takes place, and in that transfer of persons or merchandise from one train to another occurs by the adjoining extremes of the two trains once they have been coupled.

2. Transfer installation from one train to another to put into practice the method as per the claim 1, characterized in that
- rails (4) and (7) share a common track (3) upon which vehicles (1) and (2) temporarily circulate one behind the other in order to carry out the transfer operation;
- the adequate means allowing the mentioned transfer comprise devices located at the head or tail of the mentioned vehicles, being appropriate for the transfer of people or merchandise in the direction of the motion;
- the adequate means allowing to couple the mentioned vehicles comprise devices located at the head or tail of the mentioned vehicles, suitable to insure that said vehicles being maintained one behind the other upon the common track (3) during the transfer phase.

3. Installation, as per the claim 2, characterized in that the common track (3) is of a length according to the maximum time that is necessary for the transfer and taking into account the common speed of the two vehicles during the transfer operation.

4. Installation, as per the claim 2, characterized in that the common track (3) belongs to the long distance rail (4) and in that the short distance rail (7) joins together with the mentioned long distance rail by a point switch system located at each end of the mentioned track.

## Patentansprüche

1. Umsteig/Umladeverfahren von einem in einen anderen Zug mit Hilfe von Fahrzeugen, welche auf Geleisen verkehren, die aus einer oder zwei Schienen bestehen und folgender Art ist:
a. In Bezug auf die Gleise:
- ein erstes kontinuierliches Fernverkehrsgleis (4), welches zwei Haupt-Endstationen (5) und (6) miteinander verbindet und auf welchem, ohne anzuhalten, ein erstes Fahrzeug (1) verkehrt;
- mindestens ein zweites Gleis (7) begrenzter Länge, auf welchem ein zweites Fahrzeug (2) verkehrt, welches dazu geeignet ist, das Umsteigen/Umladen von Personen oder Gütern von einem zum anderen fahrenden Fahrzeug zu ermöglichen, wobei jedoch das zweitgenannte Fahrzeug sogleich zu einem zweitrangigen Bahnhof (8) zurückfährt, um dort eine Beladung und/oder Entladung durchzuführen;
b. In Bezug auf die Fahrzeuge, Mittel die dazu geeignet sind, den genannten Umsteig/Umladevorgang, die zeitweise Ankupplung beider Fahrzeuge, sowie den Informationsaustausch zwischen beiden Fahrzeugen zu ermöglichen, um deren entsprechende Fahrgeschwindigkeiten während des Umsteige/Umladevorganges einander anzugleichen, sowie den Anfang und das Ende des genannten Passagier-/ Güterumschlages zu überwachen und sämtliche Signale zu erzeugen, die zum Schutze des Umsteige/Güterumschlages erforderlich sind;
dadurch gekennzeichnet, dass die Fahrzeuge (1) und (2) zeitweise eines nach dem anderen einen gemeinsamen Schienenstrang (3) der Geleise (4) und (7) benutzen, bis sie Fahrzeugkopf an Fahrzeugende einander ankuppeln und dadurch, dass das Umsteigen der Passagiere oder der Güterumschlag von einem Zug in den anderen an den Enden der beiden Züge während deren Zusammenkupplung durchgeführt wird.

2. Umsteig/Umschlaganlage von einem Zug in den anderen, zwecks praktischer Durchführung des Verfahrens gem. Patentanspruch 1, dadurch gekennzeichnet, dass:
- die Gleisstränge (4) und (7) einen gemeinsamen Gleisstrang (3) enthalten, welchen die Fahrzeuge (1) und (2) zeitweise einer nach dem anderen benutzen, um den Passagier/Güterumschlag durchzuführen;
- die Mittel, die es ermöglichen, den genannten Fahrgast/Güterumschlag durchzuführen, enthalten Vorrichtungen am Fahrzeug-Kopf- oder am Fahrzeug-Schlussende, die dazu geeignet sind, den Fahrgast- oder Güterumschlag in der Bewegungsrichtung der Züge zu ermöglichen;
- die Mittel, die dazu geeignet sind, die beiden Fahrzeuge aneinander zu kuppeln, enthalten Vorrichtungen, die am Kopf- oder am Schlussende der genannten Fahrzeuge angeordnet und geeignet sind, die Wartung letzterer eines nach dem anderen auf dem gemeinsamen Gleisstrang (3) während des Fahrgast/Güterumschlages sicherzustellen.

3. Anlage gem. Patentanspruch 2, dadurch gekennzeichnet, dass die gemeinsame Gleisstrecke (3) eine Länge aufweist, welche von der als höchstes erforderlichen Umschlagszeit und von der gemeinsamen gleichen Geschwindigkeit beider Fahrzeuge während des Umschlages abhängig ist.

4. Anlage gem. Patentanspruch 2, dadurch gekennzeichnet, dass die gemeinsame Gleisstrecke (3) dem Fernverbindungsgleis (4) angehört und dadurch, dass das kurze Gleis (7) an das genannte Fernverkehrsgleis vermittels Weichen angeschlossen ist, welche an jedem Ende der genannten Gleisstrecke angeordnet sind.
